(19) Europäisches Patentamt
European Patent Office
Office européen des brevets

(11) **EP 1 590 861 B1**

(12) **EUROPEAN PATENT SPECIFICATION**

(45) Date of publication and mention
of the grant of the patent:
**30.03.2016 Bulletin 2016/13**

(51) Int Cl.:
*H01R 4/62* (2006.01)  *H05B 3/84* (2006.01)
*H01Q 1/12* (2006.01)  *C03C 17/36* (2006.01)
*B23K 35/26* (2006.01)  *B32B 17/10* (2006.01)
*C22C 12/00* (2006.01)  *C22C 13/00* (2006.01)

(21) Application number: **04703854.2**

(22) Date of filing: **21.01.2004**

(86) International application number:
**PCT/GB2004/000207**

(87) International publication number:
**WO 2004/068643 (12.08.2004 Gazette 2004/33)**

(54) **VEHICULAR GLAZING PANEL**

FAHRZEUG-GLAZING-PANEL

PANNEAU DE VITRAGE POUR AUTOMOBILE

(84) Designated Contracting States:
**AT BE BG CH CY CZ DE DK EE ES FI FR GB GR HU IE IT LI LU MC NL PT RO SE SI SK TR**

(30) Priority: **30.01.2003 GB 0302230**

(43) Date of publication of application:
**02.11.2005 Bulletin 2005/44**

(73) Proprietor: **Pilkington Group Limited**
**St. Helens**
**Merseyside WA10 3TT (GB)**

(72) Inventors:
• **COOK, Andrew, John**
**Warwickshire B80 7BY (GB)**
• **DAY, Stephen, Roland**
**Greater Manchester WN6 0TB (GB)**
• **LYON, Michael**
**Lancashire L39 0HX (GB)**

(74) Representative: **Pettet, Nicholas Edward et al**
**Pilkington Group Limited**
**Intellectual Property**
**Pilkington European Technical Centre**
**Hall Lane**
**Lathom**
**Ormskirk, Lancashire L40 5UF (GB)**

(56) References cited:
**EP-A- 0 612 577    EP-A- 0 974 558**
**EP-A- 1 199 289    US-A- 3 771 211**
**US-A- 4 057 671    US-A- 4 396 826**
**US-A- 5 616 417    US-A- 6 086 687**

• **PATENT ABSTRACTS OF JAPAN vol. 2000, no. 07, 29 September 2000 (2000-09-29) & JP 2000 119046 A (NIPPON SHEET GLASS CO LTD), 25 April 2000 (2000-04-25)**

**Description**

The present invention relates to a vehicular glazing panel, which includes lead-free solder to join together two or more electrically conductive components that are comprised in the glazing panel, and to use of lead-free solder in such a manner. More particularly the present invention relates to an automotive glazing panel, which includes lead-free solder joining together an electrically conductive component used in a high current application, for example an electrical connector with a busbar that exists on a surface of the glazing panel, or used in a low current application, for example an antenna connector with an antenna element that exists on a surface of the glazing panel, such that the occurrence of a stress fault in the glazing panel in the region of the solder is inhibited, and again to use of lead-free solder in this way.

Lead is known to be harmful, and there is pressure to reduce its use, including in solders. In fact, lead-free solders themselves are already well known, but most applications and uses of lead-free solders are in connection with the microelectronics and plumbing industries. European Patent No. 0704727 B1 and US Patent No. 4,758,407 are representative patents from each of these respective industries. Use of lead-free solders is expanding into other industries, including the automotive industry, where an example of such usage can be found in US Patent No. 6,136,230. The '230 patent describes and claims a lead-free, electrically conductive paste that is used to form a circuit or an electrode on a glass substrate, to which an object is joined using lead-free solder. In the embodiment where the glass substrate is an automobile window, the circuit formed on the glass imparts antifogging properties to the window. The specific lead-free solders tested for the '230 patent are a tin-silver-bismuth solder and a tin-silver-copper solder. The electrically conductive paste is formed from a boron-bismuth-oxygen glass frit and also contains silver and optionally one or more of copper, palladium and platinum. The composition of the electrically conductive paste in the '230 patent was discovered to have a low firing temperature and was thus able to overcome the problems encountered and described therein of heat resistance and wettability with respect to lead-free solder.

There remains a problem, however, that can and often does occur when soldering to glass; the occurrence of one or more stress faults in the glass. An automotive glazing panel generally comprises a pane of glass, which is often provided with a heater element to enable auto-defrosting or de-misting in a relatively short period of time (2-3 minutes) as and when required. The heater element is usually composed of either thin tungsten wires (approximately 20 $\mu$m in diameter), which are connected to busbars for their power supply - as is known in the art, or of fired, printed silver-containing ink lines having integrally printed busbars - as is also known in the art. The busbars are normally located on top of a band of fired, printed ink, which is preferably black and which extends around the periphery of the pane of glass. Such a band is known as an obscuration band. For the avoidance of doubt, the term "on top of..." (and other such similar terms describing the relative position of two entities) is used herein with reference to the situation where the vehicular glazing panel is horizontal and the surface thereof which is to face into a vehicle is facing upwards. Of course, when installed in a vehicle, the glazing may have any orientation (not necessarily horizontal) and thus such relative terms should be construed accordingly. One or more electrical connectors may be soldered to the busbars, preferably using lead-free solder, although use of lead-containing solder is currently more prevalent. Often lead-free solder having a high tin content (greater than 50 % by weight) is preferred on account of its good wettability. However, it has been observed that stress faults are especially prevalent with certain lead-free solders of high tin content.

An automotive glazing may alternatively or additionally comprise an antenna element for communication purposes, for example AM/FM radio, television, telephone (GSM), navigation (GPS), remote keyless entry and paging systems amongst others. The antenna element may be composed of fired, printed silver-containing ink, which is deposited in a manner similar to that used in heater element and busbar deposition, as is known in the art. The antenna element may often be at least partially located on top of the aforementioned obscuration band. An antenna connector, for example an antenna button, may be soldered to the antenna element (in readiness for connection of for example a co-axial cable) again using lead-free solder, which often also has a high tin content, leading to the occurrence of stress faults in the glass.

There are two types of stress fault related to soldering that may occur: in toughened glass, one type manifests itself as small visual defects which resemble blisters in the black ink of the obscuration band and in the corresponding region of glass, whereas in a laminated glazing, the stress fault manifests itself as one or more cracks in the ply of the laminate to which soldering has occurred. These defects are clearly visible through the glazing panel from the opposite side to the connector. On occasion they are pronounced to the extent that the glazing panel must be rejected as faulty. The second type of stress fault may be found in cases where the functional layer of silver-containing ink (i.e. a heater element and associated busbars, or an antenna element) is overprinted onto the obscuration band layer of fired ceramic ink, and adhesion of the solder between the appropriate connector and the silver ink is reduced. Under the influence of stress, a structural defect, e.g. a crack, can occur at the interface between the solder and the layer of silver-containing ink (beneath at least one of the electrical connector feet which is soldered to the busbar in the high current application, and beneath the bottom surface of the antenna connector which is soldered to the antenna element in the low current application) and lead to shear mode failure. The soldered joint between the connector and the layer of silver-containing ink may thus weaken to the extent such that relatively small additional forces exerted on the connector may result in it becoming completely detached from the layer of silver-containing ink. Thus the occurrence of stress faults poses a serious problem, particularly in terms of the quality and reliability of glazing panels that have been soldered with lead-free solder having a high tin content. Furthermore, the occurrence of one or more stress faults in a glass panel appears to be a particular problem when the glass is toughened, although they often occur in laminated panels also.

The present invention therefore seeks to provide a vehicular glazing panel, comprising lead-free solder, in which the occurrence of solder-related stress faults therein is inhibited. None of the currently available literature (and particularly the '230 patent described earlier) either acknowledges or seeks to solve the problem that the present invention seeks to solve, namely a method of reducing the occurrence of stress faults in a glass panel subsequent to soldering. The inventors were surprised to discover that by using lead-free solder - including lead-free solder having a relatively high tin content - having one or more specific chemical elements incorporated (herein referred to as stress modifiers), the occurrence of stress faults and thus the proportion of faulty glazings to sound glazings, could indeed be inhibited. Use of such lead-free solder was found possible without any adverse effects in terms of wettability of the solder to a variety of electrically conductive components (including busbars with electrical connectors and antenna elements with antenna connectors) nor in terms of the resultant adhesion between the components that have been joined together. This is advantageous for vehicular glazing production processes in that a changeover from use of problematic lead-free solder to lead-free solder having a stress modifier incorporated ought to be simple as the production process need not be altered.

A further advantage to be gained from using lead-free solder, particularly lead-free solder incorporating a stress modifier, is that a move towards removal of all lead-containing compounds from as many vehicle parts as possible is currently underway, *via* EU legislation, e.g. the current "End of Life" Vehicle Directive (ELV Directive) 2000/53/EC which prohibits certain hazardous substances. Although Annex II to the ELV Directive states under Item 11 that lead and lead compounds in solder in electronic circuit boards and other electric applications are currently exempt, this may well be rescinded at some point in the future.

According to the invention, a mechanical stress modifier selected from bismuth, indium or antimony is used as set out in claim 1 attached hereto.

In a preferred embodment, the surface of the pane of glass is provided around its periphery with a fired-ink band, on top of which the first electrically conductive component at least partially exists.

In a further preferred embodiment, the lead-free solder contains tin.

Inhibition of the occurrence of solder-related stress faults in a glazing panel has clear advantages in that fewer panels are likely to be rejected as faulty, either visually or structurally. It is currently thought that a mechanical stress modifier serves to inhibit such occurrences by accommodating or absorbing stresses that may arise between the first electrically conductive component on the glass and the second electrically conductive component, e.g. it physically creeps so as to compensate for the expansion and induced stresses in the components that result from, e.g. differential thermal expansion between the glass and the two components.

Preferably the mechanical stress modifier comprises a metal selected from bismuth, indium or antimony, with bismuth and indium being the most preferred (as the stress relaxation properties of antimony are currently believed to be inferior). Work completed by the inventors has lead to the current belief that bismuth and indium in particular possess the correct properties, for example wettability, adhesion and creep rate, such that each is able to act as the stress absorber described previously. Tin is preferably included in lead-free solder in an amount that is less than 90 % by weight, further preferably less than 70 % by weight and most preferably less than 50 % by weight, if it is present at all. This is contrary to the teaching of many of the "lead-free solder" patents, patent applications and other relevant literature, where tin is often present in an amount that is greater than 90 % by weight (a high percentage). The present inventors have learnt that a lead-free solder which comprises a high percentage of tin may not only generate high levels of stress in a pane of glass (e.g. greater than 15 MPa, certainly greater than 30 MPa), it also lowers the creep rate of the solder and thus the solders ability to absorb stress. Alternatively, the stress-generating effect of tin may be controlled and moderated by including one or more mechanical stress modifiers in proportion to the tin content.

Creep may be defined as "a slow change in a characteristic with time or usage"; when applied specifically to mechanics the definition can be refined to "a time-dependent strain of a solid caused by stress". Creep occurs when a solid is exposed to a constant stress, for example when a load acts on a solid from above. The solid will creep, i.e. flow, in the direction of the stress thereby relaxing said stress. In some instances, a solid will flow beyond its elastic limit resulting in permanent, plastic deformation.

The fall in the stress ($\sigma$) generated in the pane of glass, after an initial rise, may be described as a function of time (t) by:

$$\sigma = A \, t^{n}$$

wherein n is a measure of the creep rate of the lead-free solder used and preferably has a value less than -0.130, and pre-exponential factor A is representative of the rate of cooling and differential thermal expansion between the glass and components. The initial rise in stress generated occurs during a short cooling period, as is now explained. Stress is measured from the time when the second electrically conductive component is joined to the first, which is immediate following application of lead-free solder to the first electrically conductive component. During the soldering process, the temperature of both the electrically conductive components and the surface of the pane of glass rises. The initial rise in stress is generated as the assembly cools because the electrically conductive components, the lead-free solder and the pane of glass all have different rates of cooling due to their different coefficients of thermal expansion and the degree to which each was initially heated. Areas of tension (particularly in the first electrically conductive component) and compression (in the glass) are thus created in the soldered assembly, yet the occurrence of stress faults in the pane of glass is inhibited. From the earlier equation, which describes stress as a function of time, it can be deduced that for a given rate of cooling (denoted by pre-exponential factor, A), as the value for n becomes more negative, the creep rate of the solder increases and therefore the faster the level of stress in the pane of glass is relaxed.

Preferably the lead-free solder has a solidus temperature of less than 183°C. A conventional tin-lead eutectic solder has a solidus temperature of 183°C, whilst an indium-tin eutectic solder (typically having a percentage composition by weight of Sn-72.2; In-20; Ag-2.8) has a solidus temperature of 118°C. Reducing the eutectic temperature of the solder appears to contribute to the effect of reducing the amount of stress initially generated in the pane of glass subsequent to soldering thereto.

The surface of the pane of glass is preferably provided around its periphery with an opaque band of fired-ceramic ink, on top of which the first electrically conductive component at least partially exists. One reason for the presence of this band is to hide electrical connections and other such unsightly items from view when looking through the glazing panel from either inside or outside of the vehicle, and is usually black to conform to vehicle aesthetics. In the field of motor vehicles such a band is known as an obscuration band. It may be the case that a stress fault in a pane of toughened glass of a vehicle glazing manifests itself as blisters in the obscuration band and in the corresponding regions of glass. A blister is a visual defect that may cause a glazing panel to be rejected on the basis of its appearance. With a laminated glazing, a stress fault may manifest as one or more cracks in the ply of glass to which soldering has occurred. Alternatively, a stress fault in the pane of glass may manifest itself as a structural defect (e.g. a crack) in the interface between the solder and the first electrically conductive component, which exists on a surface of the pane of glass. Such defects may compromise the mechanical strength of the lead-free soldered-joint, e.g. by leading to shear mode failure, and thus shorten the lifetime during which the second electrically conductive component is completely attached to the first. It is believed that these defects occur as a result of poor adhesion between the solder and the first electrically conductive component, i.e. the printed silver-containing ink layer.

Nominally the first and second electrically conductive components comprise a busbar and an electrical connector respectively, and/or an antenna element and an antenna connector respectively. With regard to a vehicle glazing panel, an electrical connector soldered to a busbar which is located on an exposed surface of a pane of glazing material (possibly on top of an obscuration band) is one of the most common couplings where solder is required to join the two together, although integrated antenna systems of the type described herein are becoming more prevalent.

It is preferable that the pane of glass used in the glazing panel is toughened. As is already well known in the field of toughened glass, a balance exists between the compressive and tensile forces in a pane of toughened glass. Therefore care must be taken when attaching components to the surface of a pane of toughened glass so as not to disturb this balance beyond what the glass is able to tolerate.

Alternatively, or additionally, the pane of glass may be comprised as one ply of a laminate and moreover may have a heating element or an antenna element provided on or in the resultant glazing panel. Both the heating element and the antenna element are normally provided either as wires within the laminate or as a silver-containing print on the innermost surface of the laminate with respect to the vehicle into which it may be installed.

The vehicular glazing panel previously described is preferably used as a motor vehicle glazing. Alternatively it may be used as an aircraft glazing.

A second aspect of the present invention is use of lead-free solder for joining together two or more electrically conductive components that are comprised in a vehicular glazing panel wherein the lead-free solder includes a mechanical stress modifier which inhibits the occurrence of a stress fault in the glazing panel in the region of the solder.

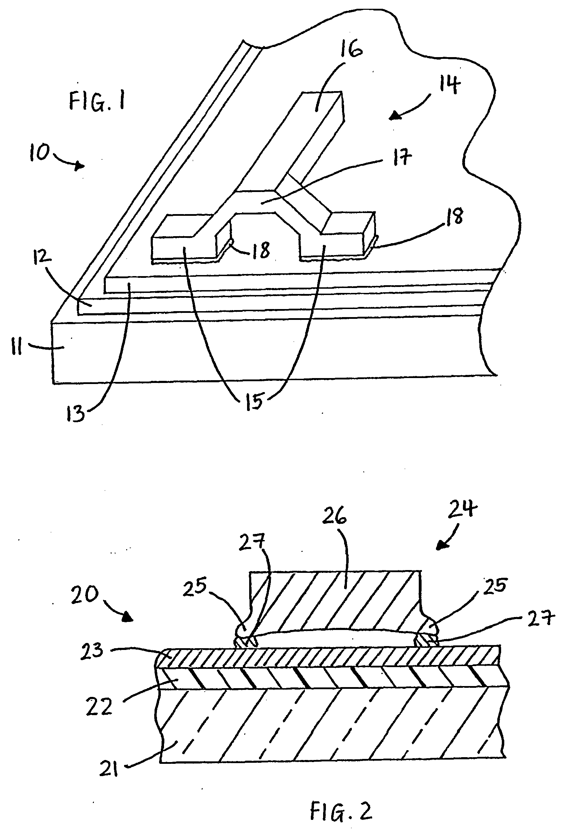

The present invention will now be more particularly described with reference to the Examples given and accompanying Figures 1 and 2, which are provided by way of illustration and not of limitation. Figure 1 is a perspective view (not to scale) of part of a vehicular glazing panel showing an electrical connector soldered to a layer of fired silver-containing ink (a busbar) that is overprinted onto an obscuration band which is provided on a pane of glass. Figure 2 is a sectional view (not to scale) of an antenna connector soldered to a layer of fired silver-containing ink (part of an antenna element) that is overprinted onto an obscuration band which is provided on a pane of glass.

Referring to Figure 1, a vehicular glazing panel 10 includes a pane of glass 11 carrying a soldered assembly including a T-piece connector (an electrical connector) 14. Pane of glass 11 is provided with a printed layer of fired silver-containing ink in the form of a busbar 13, and is also optionally provided with a layer of opaque black enamel, which forms obscuration band 12, onto which busbar 13 may be overprinted. T-piece connector 14 comprises two connector feet 15, which contact the surface to be soldered to, and connector arm 16 for attachment of an electrical lead (not shown); the region where both connector feet 15 and connector arm 16 merge is known as connector bridge 17. Each connector foot 15 is provided on its sole with a dimple (not shown) which protrudes downwards from the sole of foot 15 and thus ensures a minimum distance between the sole of foot 15 and the surface on which connector 14 is placed. Connector feet 15 are joined to layer of silver-containing ink 13 using lead-free solder 18.

Figure 2 illustrates part of a vehicular glazing panel 20 which comprises pane of glass 21 provided with a printed layer of fired silver-containing ink in the form of an antenna element 23, and optionally provided with a layer of opaque black enamel which forms obscuration band 22, onto which antenna element 23 may be overprinted. Antenna button (an antenna connector) 24 comprises antenna body 26 around the bottom of which lies lip 25. Antenna button 24 is electrically connected to antenna element 23 by lead-free solder 27 which is located between lip 25 and antenna element 23.

During soldering of connector feet 15 to busbar 13, the area of glass 11 between both connector feet 15 remains relatively cool compared with connector bridge 17, which is heated almost to the soldering temperature. As solder 18 sets, the temperature change on cooling is much greater for connector bridge 17 than for glass 11 and hence differential contraction is enhanced. A comparable effect occurs when lip 25 of antenna button 24 is soldered to antenna element 23.

Measurements were taken to record the stress generated in samples of glass as a result of having a connector soldered thereto. With a T-piece connector stress was measured at a position on the glass corresponding to the mid-point between each of the two connector feet; with a braid connector stress was measured at a position on the glass corresponding to the mid-point of the width of the soldered limb, and with an antenna button stress was measured at a position on the glass corresponding to the mid-point of the diameter of the button. The measuring instrument used was a Babinet Compensator, and samples of annealed glass were cut to size and the edges polished in accordance with the requirements of the instrument. Results are recorded in Table 1. The first set of measurements (Set 1) records the stress generated in the pane of toughened glass immediately after chosen solder 18 has been applied to layer of fired silver-containing ink 13 (the first electrically conductive component) and a) a T-piece connector, or b) a braid connector or c) an antenna button (each being a second electrically conductive component) has been joined thereto. Obscuration band 12 is present beneath the print of silver-containing ink 13 in the Set 1 measurements. The second set of measurements (Set 2) was recorded in the same manner as the first, but without the inclusion of obscuration band 12 underneath silver-containing ink 13.

**Table 1**

| Solder No. | Set 1 Stress (MPa) | | | Set 2 Stress (MPa) | | |
|---|---|---|---|---|---|---|
| | (a) | (b) | (c) | (a) | (b) | (c) |
| 1 | -9.7 | 0.7 | -2.8 | -7.0 | 0.4 | -1.1 |
| 2 | -17.8 | -16.0 | -8.2 | -21.2 | -14.7 | -5.0 |
| 3 | -11.2 | -4.1 | -4.5 | -10.1 | -3.3 | -1.9 |

Solder (1) is composed of 42 % by weight tin and 58 % by weight bismuth, and is available from e.g. Alpha-Fry Technologies, Tandem House, Marlowe Way, Beddington Farm Road, Croydon, CR0 4XS. Solder (2) is composed of (percentage by weight) 95.5 tin, 3.8 silver and 0.7 copper, and is available from e.g. Multicore Solders Ltd., Kelsey House, Wood Lane End, Hemel Hempstead, Hertfordshire. Solder (3) has composition (percentage by weight) 25 tin, 62 lead, 3 silver and 10 bismuth, and is available from e.g. Litton Precision Products International, 6 First Avenue, Globe Park, Marlow, Bucks, SL7 1YA; it is lead-containing and is shown for comparative purposes only.

As can be seen from Table 1, there is considerable variation between the different solders (with negative values indicating compression in the glass and positive values indicating tension). Beginning with the results of Set 1, clearly solder (2) is the worst performing solder as it allows much more stress to develop in the glass subsequent to soldering a connector thereto than is permitted by the remaining two solders. Solder (2) contains tin in an amount greater than 50 % by weight. Solder (1) appears to be the best performing solder out of the set; it contains tin in an amount less than 50 % by weight and also includes bismuth, which is believed to be a stress modifier. Analysis of the results of Set 2 concludes that solder (2) is again much worse in its performance than solders (1) and (3), i.e. solder (2) allows at least twice as much stress to develop in the glass subsequent to soldering a T-piece connector thereto than is allowed by either solder (1) or solder (3). Solder (2) contains tin in an amount greater than 50 % by weight. Similarly to the results of Set 1, solder (1) appears to perform the best. The level of stress permitted by solder (1), as recorded in both instances in Set 1 and Set 2, is suppressed to below 10 MPa in all instances. Although solder (3) performs well, it is in fact a lead-containing solder and is thus included for comparative purposes only; however, its inclusion illustrates that lead-free solder including a stress modifier can perform at least as well as, if not better than, conventional lead-containing solder in terms of stress absorption subsequent to soldering an electrical connector to glass.

A second test was performed to investigate the effect of soldering connectors to samples of laminated glass. Two types of laminated glass were used: laminates composed of two 1.6 mm clear glass plies having a PVB interlayer (0.76 mm thick) in between (Set A), and laminates comprising two 2.1 mm clear glass plies (Set B). Each batch of laminated samples are sub-divided into those bearing only a layer of fired silver-containing ink on an outer surface (subset 1) and those having an obscuration band beneath said silver layer (subset 2). A connector was soldered to the silver layer using each of solders (1), (2) and (3) described earlier; both braid connectors and T-piece connectors were tested.

Beginning with the Set A1 laminates, immediately after soldering each type of connector to the silver layer, more than 80 % of the samples soldered with solder (2) exhibited visible cracks in the glass ply of the laminate bearing the ink, compared to no visible cracks whatsoever when solders (1) and (3) were used. Laminate Sets A2, B1 and B2 provided similar results to those of Set A1, the difference being that 100 % of the samples soldered with solder (2) exhibited visible cracks in the glass ply of the laminate bearing the ink. This test, albeit purely observational, shows that solder (2) is by far the worst performing out of the three solders tested in terms of its ability to inhibit stress development in a pane of glass on which it is used.

## Claims

1. Use of a mechanical stress modifier, selected from bismuth, indium or antimony, in a lead free solder, for the inhibition of stress fault occurrence in a pane of glass, in the region of the solder, in a vehicular glazing panel, the glazing panel comprising:

   a first electrically conductive component which exists on a surface of the pane of glass, and
   a second electrically conductive component which is joined to the first electrically conductive component by said lead free solder.

2. Use of a mechanical stress modifier according to claim 1, where the surface of the pane of glass is provided around its periphery with a fired-ink band, on top of which the first electrically conductive component at least partially exists.

3. Use of a mechanical stress modifier according to claim 1 or 2, wherein the lead-free solder contains tin.

## Patentansprüche

1. Verwendung eines mechanische Spannungen modifizierenden Materials, das unter Wismut, Indium oder Antimon ausgewählt wird, in einem bleifreien Lötmittel für die Hemmung des Auftretens von Spannungsfehlern in einer Glasscheibe im Bereich des Lötmittels in einem Kraftfahrzeugverglasungspanel, wobei das Verglasungspanel umfasst:

   eine erste elektrisch leitfähige Komponente, die auf einer Oberfläche der Glasscheibe vorhanden ist, und
   eine zweite elektrisch leitfähige Komponente, die durch das bleifreie Lötmaterial mit der ersten elektrisch leitfähigen Komponente verbunden ist.

2. Verwendung eines mechanische Spannungen modifizierenden Materials nach Anspruch 1, wobei die Oberfläche der Glasscheibe um ihren Randbereich herum mit einem eingebrannten Tintenband versehen ist, auf dem oben drauf die erste elektrisch leitfähige Komponente mindestens teilweise vorhanden ist.

3. Verwendung eines mechanische Spannungen modifizierenden Materials nach Anspruch 1 oder 2, wobei das bleifreie Lötmittel Zinn enthält.

## Revendications

1. Utilisation d'un modificateur de contrainte mécanique, choisi parmi le bismuth, l'indium ou l'antimoine, dans une soudure sans plomb, pour l'inhibition de l'occurrence d'un défaut de contrainte dans une vitre, dans la région de la soudure, dans un panneau de vitrage pour véhicule, le panneau de vitrage comprenant :

un premier composant électriquement conducteur qui existe sur une surface de la vitre, et
un second composant électriquement conducteur qui est assemblé au premier composant électriquement conducteur par ladite soudure sans plomb.

2. Utilisation d'un modificateur de contrainte mécanique selon la revendication 1, dans laquelle la surface de la vitre est prévue autour de sa périphérie, avec une bande d'encre soumise à la cuisson, sur le dessus de laquelle le premier composant électriquement conducteur existe au moins partiellement.

3. Utilisation d'un modificateur de contrainte mécanique selon la revendication 1 ou 2, dans laquelle la soudure sans plomb contient de l'étain.

FIG. 1

FIG. 2

**EP 1 590 861 B1**

**Patent documents cited in the description**

- EP 0704727 B1
- US 4758407 A
- US 6136230 A